Europäisches Patentamt

European Patent Office

Office européen des brevets

(11) Veröffentlichungsnummer: **0 597 910 B1**

(12) **EUROPÄISCHE PATENTSCHRIFT**

(45) Veröffentlichungstag der Patentschrift: **09.08.95**

(51) Int. Cl.⁶: **C03B 7/086**, C03B 7/092

(21) Anmeldenummer: **92916039.8**

(22) Anmeldetag: **23.07.92**

(86) Internationale Anmeldenummer:
**PCT/DE92/00611**

(87) Internationale Veröffentlichungsnummer:
**WO 93/02975 (18.02.93 93/05)**

(54) **VORRICHTUNG ZUR HERSTELLUNG VON GLASMASSECHARGEN.**

(30) Priorität: **26.07.91 CS 2346/91**

(43) Veröffentlichungstag der Anmeldung:
**25.05.94 Patentblatt 94/21**

(45) Bekanntmachung des Hinweises auf die
Patenterteilung:
**09.08.95 Patentblatt 95/32**

(84) Benannte Vertragsstaaten:
**DE GB IT**

(56) Entgegenhaltungen:
**DE-A- 3 620 082**
**DE-B- 1 069 345**
**DE-U- 8 503 883**

(73) Patentinhaber: **J. WALTER CO. MASCHINEN GMBH**
**Kronacher Strasse 2,**
**Steinberg**
**D-96352 Wilhelmsthal (DE)**

(72) Erfinder: **NOVOTNY, Frantisek**
**Zarvbova 498**
**Kamyk**
**142 00 Praha 4 (CS)**
Erfinder: **HOLEC, Jiri**
**Str. Pod Trebesinem 940/16**
**100 00 Praha 10 (CS)**

(74) Vertreter: **Pöhlau, Claus, Dipl.-Phys.**
**Patentanwälte**
**Louis, Pöhlau, Lohrentz& Segeth,**
**Postfach 30 55**
**D-90014 Nürnberg (DE)**

EP 0 597 910 B1

## Beschreibung

Die Erfindung betrifft eine Vorrichtung gemäß dem Oberbegriff des Anspruchs 1.

Bei der Bearbeitung von Fertigglas ist in der Regel eine bestimmte, für das herzustellende Erzeugnis notwendige Glascharge von einer gegebenen Glasquantität abzutrennen. Die gewünschte Charge wird entweder durch Schöpfen der entsprechenden Glasmasse von der Oberfläche eines Bades gewonnen, oder es wird auf einen aus einem Ofen ausfließenden Fertigglasstrom geeignet eingewirkt.

Bei der sog. Auslauftechnologie fließt bspw. aus einem Ofen kontinuierlich ein Fertigglasstrom in eine Form, deren Boden gleichzeitig absinkt. Nachdem die gewünschte Glasmenge in die besagte Form eingeflossen ist, wird der Glasstrom abgeschnitten. Eventuell wird der Glasstrom durch eine rasche Bewegung der Form nach unten unterbrochen. Unter den Auslaß kann dann eine neue Form eingeschoben werden, wie z.B. in der DE-OS 3 924 238 beschrieben ist.

Bekannt ist auch die Fertigglas-Ausgußregulierung mit einem Stab, bei dem es sich um einen durch die Glasmasse durchgehenden und in die Auslaßöffnung hineinreichenden Molybdenstab handeln kann. Durch Verschiebung des Stabes wird die ausfließende Glasmenge so weit verringert, daß die Glasmasse im Auslaß erstarrt und aufhört auszufließen. Das Ausfließen kann anschließend durch Erhitzen der Auslaßöffnung mit elektrischem Strom wieder begonnen werden. Eine solche Vorrichtung, sowie eine Ausgußerkaltung, wie sie in der DE-PS 3 130 683 beschrieben ist, kann zur Unterbrechung und zur Wiederaufnahme der Arbeit an einem Glasschmelzofen angewandt werden; sie ist jedoch nicht zur Bildung einer genau definierten Glascharge geeignet.

Der am einen Ende erweiterte Regulierstab kann gemäß DE-PS 2 933 169 bis unter die engste Stelle der Auslaßöffnung reichen und den Glasmassenstrom durch Hochziehen des erweiterten Teiles des Stabes in den eingeengten Ausflußraum schließen. Diese Methode ist jedoch nur bei sehr niedrigviskosen Schmelzen anwendbar.

In mechanischen Dosiereinrichtungen wirkt auf die ausfließende Glasschmelze ein Kolben, der bei seiner Bewegung nach unten die ausfließende Glasschmelze beschleunigt und bei der Rückbewegung nach oben die Glasschmelze bremst. Im geeigneten Augenblick wird das Fertigglas abgeschnitten und die Glascharge gebildet, wie z.B. in der US-PS 4 087 268 angegeben ist.

Diese bekannten Vorrichtungen ermöglichen jedoch nur die Herstellung quasi ununterbrochener Glasmassenfolgen. Die Pause zwischen einzelnen Chargen kann nur so lang sein, bis der den Glasausfluß verhindernde Kolben in seine obere Totlage kommt. Dann muß mit der Ausbildung einer weiteren Charge begonnen werden.

Eine gewisse Verbesserung kann durch die Verwendung eines Kolbens erreicht werden, der an seinem ausrückbaren Teil mit einer Kugel ausgebildet ist, wie in der EP-OS 0 102 108 offenbart ist.

Es gibt auch Vakuumdosierer, in denen der Fertigglasausfluß durch Luftdruck über der Glasmassenoberfläche in einem Dosierkopf oder in einer Vakuumkammer reguliert wird. Die Pausendauer zwischen zwei Fertigglaschargen ist in diesem Fall nicht durch das Erreichen der oberen Totlage eines Kolbens begrenzt, weil der Unterdruck über der Glasmassenoberfläche beliebig lang gehalten werden kann. Das Problem bei den Vakuumdosierern ist jedoch, daß die Masse der Fertigglastropfen schwankt und die Dosiererkonstruktion nicht die gewünschte Glasmassenhomogenisierung ermöglicht. Das größte Problem ist hierbei jedoch, daß die Fertigglasoberfläche in der Ausflußöffnung nicht stabil bleibt. Es kann dazu kommen, daß in die Ausflußöffnung an einer Stelle Luft eindringt, während das Fertigglas an anderer Stelle ausfließt.

Das zuletzt erwähnte Problem der Fertigglasstabilität in der Ausflußöffnung wird im Urheberschein der UdSSR Nr. 643 440 gelöst, eine Lösung des Problems der Masseschwankungen der Fertigglaschargen gibt diese Bescheinigung jedoch nicht.

Die DE-OS 2 433 444 beschreibt eine Methode der Fertigglaschargenbildung. Der ausfließende Fertigglasstrom wird von einer sich auf die Ausflußöffnung schiebenden Platte abgeschnitten, die dann die besagte Öffnung schließt. Die Qualität der Fertigglaschargen ist jedoch niedrig, da beim Öffnen Reste der erstarrten Glasmasse in die neue Charge mitgerissen werden.

In der DE-OS 3 216 067 wird ein Verfahren zur Tropfendosierung in einem kontinuierlichen Schmelzofen beschrieben. Die hierbei zur Anwendung gelangende Vorrichtung besteht aus einem zylindrischen, unterseitig in einen abgestumpften Teil übergehenden Ausflußteil. Im Ausflußteil befindet sich ein in der Höhe einstellbarer, mit einem Schneckengewinde versehener Kolben. Ein ähnliches Verfahren sowie eine Vorrichtung werden in der DE-OS 3 620 082 beschrieben. Bei den zuletzt genannten Vorrichtungen ist die Spaltbreite zwischen dem Ausflußgefäß und dem Kolben konstant. Das ist deshalb ungünstig, weil mit einem engen Spalt ein guter Verschluß der Auslaßöffnung nur um den Preis einer Verschlechterung des Ausflusses erreichbar ist, während ein breiter Spalt zu Problemen beim Verschließen des Auslasses führt.

Der Erfindung liegt die Aufgabe zugrunde, eine Vorrichtung der eingangs genannten Art zu schaffen, welche die oben beschriebenen Mängel mit einfachen Mitteln beseitigt.

Diese Aufgabe wird erfindungsgemäß durch die Merkmale des kennzeichnenden Teiles des Anspruchs 1 gelöst. Weiterbildungen der erfindungsgemäßen Vorrichtung sind in den Unteransprüchen gekennzeichnet.

Mit der erfindungsgemäßen Vorrichtung ergeben sich die Vorteile, daß die genaue Dosierung großer Fertigglasmengen möglich ist, und daß die Zeitdauer zwischen einzelnen Chargen bis auf größenordnungsmäßig 2 bis 5 Minuten verlängerbar ist. Diese Verlängerung hat bei Dosierungen großer Fertigglaschargen aus zwei Gründen eine erhebliche Bedeutung: Der erste Grund besteht im hohen Zeitbedarf bei der Verarbeitung großer Fertigglasschargen bei großer Fertigglasmasse und einem formmäßig anspruchsvollen Erzeugnis. Der zweite Grund ist die gegebene Kapazität eines entsprechenden Glasschmelzofens. Bei der Dosierung kleinerer Fertigglaschargen ist eine längere Verarbeitungsdauer bei formenmäßig anspruchsvollen Erzeugnissen ebenfalls vorteilhaft.

Die Pumpelemente befinden sich erfindungsgemäß nicht an einer zylindrischen sondern an einer kegel- oder schalenförmigen Oberfläche, so daß die Spaltbreite zwischen dem Kolben und dem Ausflußgefäß, in dem der Kolben wirkt, variabel ist.

Die Parallelität der Arbeitsflächen des kegel- oder schalenförmigen Teiles des verbreiterten Körpers des Kolbens und des Ausflußgefäßes ermöglicht es, daß bei unterbrochenem Fertigglasausfluß die Spaltbreite minimal ist und der Kolben bis in die Ausflußöffnung reicht, so daß der aufgehängte Fertigglasspiegel nicht nur an den Rändern der Auslaßöffnung, sondern auch am Kolben festgehalten wird. Da der Spalt sehr eng ist, ist auch die Oberfläche des aufgehängten Spiegels klein, weshalb auch der aufgehängte Flüssigkeitsspiegel gegen Zerfließen viel stabiler ist. Die Pumpelemente können nicht nur am Kolben vorgesehen sein sondern auch am kegel- oder schalenförmigen Teil des Ausflußgefäßes, was zu einer höheren Wirksamkeit des Fertigglaspumpens führt.

An der Arbeitsfläche spiralförmig verlaufende Rillen ergeben unter der Bedingung, daß sich zwischen den beiden Oberflächen ein enger Spalt bildet, eine größere Wirksamkeit des Fertigglaspumpens.

Mit Rillen, die ein sinusförmiges Profil aufweisen, ergibt sich durch die Pumpelemente eine Erhöhung der Intensität des Fertigglaspumpens, was sich auch bei Unterbrechung des Fertigglasausflusses günstig bemerkbar macht.

Falls sich die Rillen der Pumpelemente sowohl am Kolbenkörper als auch am Ausflußgefäß befinden, ist für eine optimal wirksame Fertigglas-Pumpwirkung ihre zueinander rechtwinkelige Anordnung am günstigsten.

Weitere Einzelheiten, Merkmale und Vorteile ergeben sich aus der nachfolgenden Beschreibung von in der Zeichnung schematisch dargestellten Ausführungsbeispielen der erfindungsgemäßen Vorrichtung. Es zeigen:

Fig. 1     eine Schnittdarstellung einer ersten Ausführungsform der Vorrichtung,

Fig. 2     in einem größeren Maßstab einen Abschnitt einer Rille zwischen dem Kolbenkörper und dem Ausflußgefäß in einer Schnittdarstellung, und

Fig. 3     eine der Fig. 1 ähnliche Schnittdarstellung einer zweiten Ausführungsform der Vorrichtung.

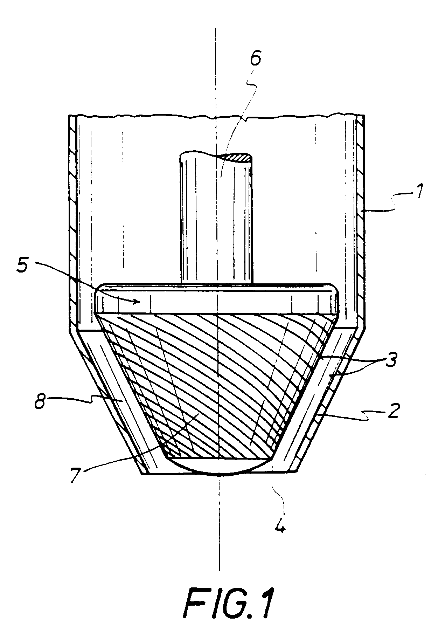

Fig. 1 zeigt ein Ausflußgefäß mit einem Innendurchmesser von z.B. 200 mm, das einen verstärkten kegelförmigen Abschnitt 2 von z.B. 50 mm Länge aufweist, an dessen innerer Oberfläche sinusartige Pumpenelemente 3 in Rillenform ausgebildet sind. Der kegelförmige Abschnitt bzw. Teil 2 des Ausflußgefäßes 1 ist mit einer 500 mm unter dem Glasmassespiegel befindlichen Auslaßöffnung 4 ausgebildet, die einen Durchmesser von bspw. 100 mm aufweist. Im Ausflußgefäß 1 bewegt sich ein Kolben 5, der eine in einen erweiterten Arbeitskörper 7 übergehende Welle 6 aufweist. Der Körper 7 hat im oberen Teil einen Durchmesser von z.B. 160 mm und besitzt die Form eines abgestumpften Kegels, dessen kleinere Grundebene der Ausflußöffnung 4 zugewandt ist und dessen Mantel eine kgelförmige Funktionsfläche mit Pumpelementen 3 bildet. Der Kolben 5 ist in axialer Richtung des Ausflußgefäßes höhenverstellbar und zum Gefäß 1 und zur Ausflußöffnung 4 koaxial angeordnet. Er dreht sich um seine eigene Längsachse.

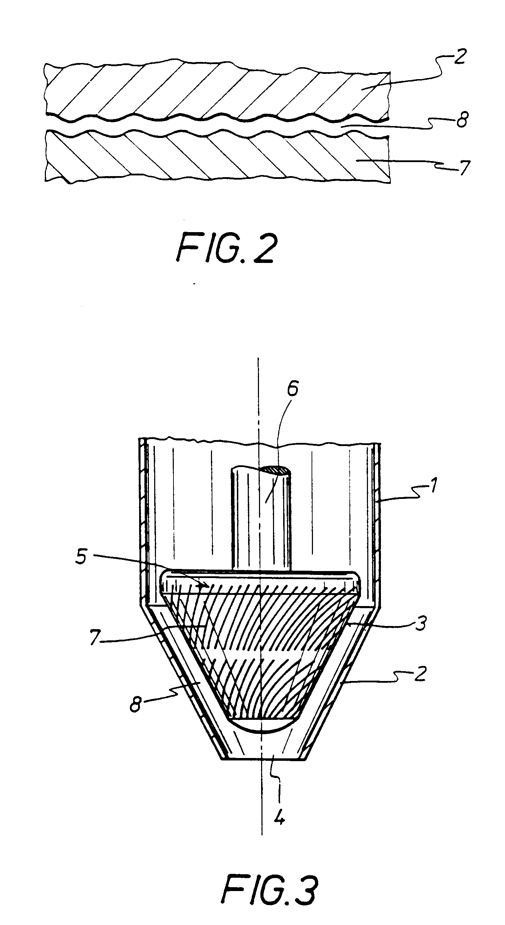

Die Pumpelemente 3 sind an beiden Arbeitsflächen, d.h. an denen des Körpers 7 des Kolbens 5 sowie am kegelförmigen Teil 2 des Ausflußgefäßes 1 vorgesehen und als Rillen mit einem Sinusprofil ausgebildet. Zwischen den besagten Rillen ist z.B. ein 70 mm langer Spalt 8 ausgebildet, wie aus Fig. 2 ersichtlich ist. Dieses Profil mit einer Teilung von 20 mm zwischen benachbarten Sinus-Maxima und mit einer Rillentiefe von 6,4 mm ist für eine Spaltbreite 8 von 2 mm optimiert, die in einem konkreten Ausführungsbeispiel als Arbeitsbreite gewählt ist. Eine Reduktion der Breite des Arbeitsspaltes 8 unter 2 mm ist problematisch, denn es sind die Herstellungsungenauigkeiten, die thermische Dilatation, die Belastung mit dem hydrostatischen Druck des Fertigglases und das Drehmoment zu berücksichtigen. Deshalb wird das angegebene Profil im mittleren Arbeitsflächenabschnitt gewählt. In Richtung nach unten werden die Pumpelemente 3 infolge der Kegelform der Fläche schmäler und in Richtung nach oben breiter.

Die Vorrichtung wird mit einer Bleikristall-Glasmasse gefüllt und einschließlich der Arbeitsflächen und des Spaltes mit einem Heizelement auf 100°C erhitzt, wobei die genannte Glasmasse eine dynamische Viskosität von 400 Pa.s besitzt. Vom Glasmassenspiegel zur Ausflußöffnung 4 beträgt die einen entsprechenden hydrostatischen Glasmassedruck bildende Höhendifferenz 500 mm. Dieser Druck wird durch den Auftrieb ausgeglichen, der durch den mit drei Umdrehungen pro Minute rotierenden Kolben 5 erreichet wird.

Ein weiteres Ausführungsbeispiel zeigt Fig. 3, das eine Vorrichtung darstellt, in der die Pumpelemente 3 nur an der Fläche des Kolbens 5 vorgesehen sind. Wegen der im Vergleich zur oben in Verbindung mit Fig. 1 beschriebenen niedrigeren Pumpenwirksamkeit ist hier die Arbeitsfläche so verlängert, daß die Länge des Spaltes 8 120 mm beträgt. Die Auslaßöffnung 4 besitzt hier einen Durchmesser von 60 mm. Infolge der Tatsache, daß die über die ganze Kegelfläche verlaufenden Pumpelemente 3 insbes. an ihren voneinander entfernten Endabschnitten von der optimalen Größe wesentlich abweichen würden, sind sie in zwei durch eine Unterbrechung getrennten Bänden vorgesehen. In der Mitte des unteren Bandes besitzen die Pumpelemente 3 ein optimales Profil, sie werden über dieser Mitte breiter und unter ihr schmäler. Im oberen Band sind die Verhältnisse ähnlich.

Im Prinzip arbeiten alle erfindungsgemäßen Vorrichtungen derartig, daß sie eine langfristige Einhaltung jedes eingestellten Ausflusses ermöglichen.

Die Chargenbildung beginnt so, daß der Kolben 5 angehoben wird, wobei die Hebegeschwindigkeit so gewählt wird, daß ein vorzeitiger Fertigglasausfluß verhindert wird und keine Luftansaugung in die Ausflußöffnung 4 hinein erfolgt. Dann wird der Kolben 5 nach unten bewegt, wobei er den Fertigglasausfluß unterstützt. Wenn der Kolben 5 sich der Arbeitsfläche des Ausflußgefäßes 1 nähert, wird der Auslauf durch die Auftriebskraft in dem entstandenen Spalt 8 eingestellt. D.h. die entstandene Fertigglascharge wird abgeschnitten.

Die Glasmasse, die schon aus der Auslaßöffnung 4 ausgeflossen ist, sich jedoch nicht in der abgeschnittenen Charge befindet, bleibt an der Öffnung hängen und bildet einen Anteil einer nachfolgenden weiteren Charge oder sie bildet einen kleinen Resttropfen, der als Abfall abgeschnitten wird.

Die Spaltbreite 8 zwischen dem Kolben 5 und dem Ausflußgefäß 1 ist ein wichtiger Parameter, der sowohl beim Chargenausfluß als auch bei der eingestellten Entnahme zu Geltung kommt. Die Ausflußgeschwindigkeit ist direkt proportional zum Quadrat der Spaltbreite 8 und bei einer definierten eingestellten Entnahme ist der von Aufhebeschaufeln gebildete Auftrieb im Spalt 8 indirekt proportional zur Spaltbreite 8.

Die genannte Abhängigkeit kann durch folgende Relation ausgedrückt werden:

$$\frac{12 \cdot v \cdot n \cdot l}{d^2}.$$

wobei

l = Spaltlänge in m
d = Spaltbreite in m
v = Flüssigkeitsgeschwindigkeit in $m.s^{-1}$
n = Viskosität in Pa.s
p = Druckverlust in Pa

Diese Formel drückt den Druckverlust einer durch den Spalt 8 zwischen zwei Oberflächen fließenden Flüssigkeit aus.

Für den im Spalt 8 zwischen dem Kolben 5 und dem kegelförmigen Teil 2 des Ausflußgefäßes 1 entstehenden Auftrieb wurde aufgrund langfristiger Modellversuche eine ähnliche Beziehung gefunden:

$$\frac{k \cdot 12 \cdot v \cdot n \cdot l}{d^2}$$

In dieser Formel ist v die relative Bewegungsgeschwindigkeit der Arbeitsoberflächen in $m.s^{-1}$, k ist eine von der Vollkommenheit des Entwurfes und der Ausführung der Pumpelemente abhängige Konstante, p ist der gegen den hydrostatischen Druck der Glasmasse wirkende Auftrieb. Die anderen Symbole, d.h. n, l und d haben die gleiche Bedeutung wie in der zuerst angegebenen Formel. Der Wert k ist kleiner als 1. Für die vorgeschlagenen Werte des Neigungswinkels und des sinusförmigen Rillenprofils an beiden Arbeitsflächen kann k Werte größer als 0,1 erreichen. Diese Tatsache ermöglicht es, den erforderlichen Auftrieb an verhältnismäßig kleinen Arbeitsflächen zu erzielen.

Die erfindungsgemäße Vorrichtung ist insbes. für die Herstellung von Fertigglaschargen, insbes. für solche großer Masse und/oder für Erzeugnisse mit komplizierten Formen bestimmt. Besonders geeignet ist sie für große Fertigglaschargen, die in kleinen Glasschmelzofen geschmolzen werden.

**Patentansprüche**

1. Vorrichtung zur Herstellung von Glasmassechargen mit einem eine Auslaßöffnung (4) aufweisenden Ausflußgefäß (1) mit einem zylindrischen Abschnitt und einem daran anschließenden kegel- oder schalenförmigen Teil (2), in dem ein Kolben (5) in der Höhe verstellbar und um seine Längsachse drehbar angeordnet ist, der eine Welle (6) und einen erweiterten Arbeitskörper (7) aufweist, wobei zum Pumpen der Glasmasse Pumpenelemente (3) vorgesehen sind,

**dadurch gekennzeichnet**,

daß der erweiterte Arbeitskörper (7) des Kolbens (5) eine der Auslaßöffnung (4) im kegel- oder schalenförmigen Teil (2) zugewandte Arbeitsfläche aufweist, die parallel zur Fläche des kegel- oder schalenförmigen Teiles (2) des Ausflußgefäßes (1) verläuft, wobei die Pumpenelemente (3) an der kegel- oder schalenförmigen Arbeitsfläche des Kolbens (5) und/oder des Ausflußgefäßes (1) vorgesehen sind.

2. Vorrichtung nach Anspruch 1,
**dadurch gekennzeichnet**,
daß die Pumpenelemente (3) Rillen sind, die an der entsprechenden Arbeitsfläche spiralförmig verlaufen.

3. Vorrichtung nach Anspruch 2,
**dadurch gekennzeichnet,**
daß die Rillen der Pumpenelemente (3) ein sinusförmiges Profil aufweisen.

4. Vorrichtung nach Anspruch 2 oder 3,
**dadurch gekennzeichnet**,
daß die Rillen der Pumpenelemente (3) des Arbeitskörpers (7) des Kolbens (5) zu den Rillen der Pumpenelemente (3) des kegelförmigen Teiles (2) des Ausflußgefäßes (1) rechtwinkelig orientiert sind.

**Claims**

1. Apparatus for the production of glass-mass batches, with an outflow vessel (1) possessing an outlet orifice (4) and having a cylindrical portion and an adjoining conical or saucer-shaped part (2) in which a piston (5) is arranged so as to be adjustable in height and rotatable about its longitudinal axis, the said piston (5) having a shaft (6) and a widened working body (7), pump elements (3) being provided for pumping the glass mass, characterized in that the widened working body (7) of the piston (5) has a working surface which confronts the outlet orifice (4) in the conical or saucer-shaped part (2) and which extends parallel to the surface of the conical or saucer-shaped part (2) of the outflow vessel (1), the pump elements (3) being provided on the conical or saucer-shaped working surface of the piston (5) and/or of the outflow vessel (1).

2. Apparatus according to Claim 1, characterized in that the pump elements (3) are grooves which extend spirally on the corresponding working surface.

3. Apparatus according to Claim 2, characterized in that the grooves of the pump elements (3) have a sinusoidal profile.

4. Apparatus according to Claim 2 or 3, characterized in that the grooves of the pump elements (3) of the working body (7) of the piston (5) are oriented at right angles to the grooves of the pump elements (3) of the conical part (2) of the outflow vessel (1).

**Revendications**

1. Dispositif pour la préparation de paraisons de verre, du type comprenant une enceinte d'écoulement (1) présentant un orifice d'écoulement (4) ayant une section cylindrique sur laquelle est raccordée une portion (2) conique ou en forme de coupe, dans laquelle est monté rotatif autour de son axe longitudinal et réglable en hauteur un piston (5) se composant d'un arbre (6) et d'un corps de travail dilaté (7), dans lequel des éléments de pompage (3) sont prévus pour le pompage de la masse de verre,

caractérisé en ce que

le corps de travail dilaté (7) du piston (5) présente une surface de travail en forme de cône ou de coupe (2) orientée vers l'orifice d'écoulement (4), s'étendant parallèlement à la surface de la portion (2) en forme de cône ou de coupe de l'enceinte d'écoulement (1), les éléments de pompage (3) étant prévus sur la surface en forme de cône ou de coupe du piston (5) et/ou de l'enceinte d'écoulement (1).

2. Dispositif selon la revendication 1, caractérisé en ce que les éléments de pompage (3) sont des nervures s'étendant en forme de spirales sur la surface de travail correspondante.

3. Dispositif selon la revendication 2, caractérisé en ce que les nervures des éléments de pompage (3) présentent un profil sinusoïdal.

4. Dispositif selon les revendications 2 ou 3, caractérisé en ce que les nervures des éléments de pompage (3) du corps de travail (7) du piston (5) sont orientées à angle droit par rapport aux nervures des éléments de pompage (3) de la portion conique (2) de l'enceinte d'écoulement (1).

FIG.1

FIG.2

FIG.3